Europäisches Patentamt

European Patent Office

Office européen des brevets

(19)

(11) Numéro de publication: **0 402 219 B1**

# (12) FASCICULE DE BREVET EUROPEEN

(45) Date de publication de fascicule du brevet: **12.04.95**

(51) Int. Cl.6: **C08F 20/10**

(21) Numéro de dépôt: **90401496.6**

(22) Date de dépôt: **05.06.90**

---

(54) **Procédé et système d'amorçage pour la polymérisation anionique de monomères acryliques.**

---

(30) Priorité: **05.06.89 FR 8907374**
**22.05.90 FR 9006351**

(43) Date de publication de la demande:
**12.12.90 Bulletin 90/50**

(45) Mention de la délivrance du brevet:
**12.04.95 Bulletin 95/15**

(84) Etats contractants désignés:
**AT BE CH DE DK ES FR GB GR IT LI LU NL SE**

(56) Documents cités:
**EP-A- 274 318**
**EP-A- 402 204**
**GB-A- 1 003 543**

**THE JOURNAL OF PHYSICAL CHEMISTRY,**
**vol. 68, no. 7, juillet 1964, pages 1983-1987;**
**D.M. WILES et al.: "The butyllithium-initiated**
**polymerization of methylmethacrylate. III. Effect of lithium alkoxides"**

(73) Titulaire: **ELF ATOCHEM S.A.**
**4 & 8, Cours Michelet**
**La Défense 10**
**F-92800 Puteaux (FR)**

(72) Inventeur: **Varshney, Sunil K.**
**114 avenue de Péville**
**B-4030 Liège (BE)**
Inventeur: **Fayt, Roger**
**144 route du Condroz**
**B-4121 Neupre (BE)**
Inventeur: **Teyssie, Philippe**
**85, Bois du Rognac**
**B-4121 Neuville en Condroz (BE)**

(74) Mandataire: **Chaillot, Geneviève**
**Cabinet CHAILLOT,**
**B.P. No. 74**
**F-92703 Colombes Cédex (FR)**

---

## Description

La présente invention se rapporte à un procédé et un système d'amorçage pour la polymérisation anionique de monomères acryliques et, le cas échéant, de comonomères vinyliques. Plus particulièrement elle concerne la polymérisation d'acrylates d'alkyle primaire et la préparation de copolymères biséquencés associant une séquence d'acrylate d'alkyle primaire à une séquence de monomère méthacrylique, d'acrylate d'alkyle secondaire ou tertiaire ou de monomère vinylique.

On connaît par Journal of Physical Chemistry $\underline{68}$(7), pages 1983-87 la polymérisation anionique du méthacrylate de méthyle en présence d'un mélange de butyllithium et d'alcoolates de lithium. Malheureusement ce système d'amorceurs présente une cinétique défavorable, le rendement ne dépassant pas 30% après 21 minutes, 65% après 70 minutes. Par ailleurs, le brevet britannique n° 1 003 549 décrit un procédé de polymérisation anionique de monomères éthyléniquement insaturés faisant usage, comme catalyseurs, d'alcoolates tertiaires de métaux alcalins.

Ces alcoolates peuvent être utilisés en combinaison avec des composés organométalliques, en particulier les alkyllithiums avec lesquels ils forment des complexes. Grâce à de tels catalyseurs, la polymérisation du méthacrylate de méthyle se déroule de manière régulière dans un intervalle de températures de -40° à +20°C, après une courte période d'induction dont la durée est inversement proportionnelle à la quantité de catalyseur additionné. Jusqu'à +10°C on forme un polyméthacrylate de méthyle (PMMA) isotactique (confirmation par analyse infrarouge et par résonance magnétique nucléaire) tandis qu'au dessus de 10°C on produit un polymère tridimensionnel insoluble. La polymérisation de l'acrylate de butyle à 0°C en présence de terbutanolate de potassium produit un sirop de prépolymère visqueux.

Enfin le brevet FR-A-2 252 360 décrit un mélange d'ester éthylique de l'acide alpha-lithium-isobutyrique et d'un alcoolate de métal alcalin qui, dans la polymérisation de l'acrylate de n-butyle, n'atteint qu'un rendement de 41%.

Par ailleurs l'exemple 17 de la demande de brevet européen n° 068.887 décrit l'addition séquencée d'acrylate d'éthyle puis de méthacrylate de méthyle, en quantités équivalentes, dans le tétrahydrofuranne en présence d'un catalyseur constitué de fluorure de tétrabutylammonium et de [(1-méthoxy-2-méthyl-1-propényl)oxy]triméthylsilane. La polymérisation exothermique se déroule à une température qui n'est pas inférieure à 25°C et conduit à un copolymère liquide visqueux, de poids moléculaire moyen en nombre égal à 600, d'indice de polydispersité égal à 2,0 et constitué de 45% en moles de motifs méthacrylate et de 55% en moles de motifs acrylate.

Le problème, non résolu à ce jour, auquel s'intéresse la présente invention consiste donc à définir un système d'amorçage et un procédé permettant, avec des rendements satisfaisants, la polymérisation anionique directe d'acrylates d'alkyle primaire et, avec une cinétique plus favorable que celle des systèmes connus à base d'alcoolate de métal alcalin, la polymérisation anionique d'autres monomères acryliques, méthacryliques ou vinyliques de manière à permettre la préparation de copolymères biséquencés solides, de poids moléculaire élevé, associant une séquence d'acrylate d'alkyle primaire à une séquence d'un tel comonomère.

La présente invention est basée sur la constatation qu'on peut atteindre des rendements élevés dans la polymérisation anionique de (méth)acrylates en effectuant ladite polymérisation en présence de couples soigneusement sélectionnés d'un amorceur de formule R-M dans laquelle M désigne un métal alcalin et R un radical alkyle, aryle ou alkylaryle et d'au moins un alcoolate de métal alcalin. En effet le rendement de polymérisation d'un monomère tel que le méthacrylate de méthyle ou l'acrylate de n-butyle atteint généralement au moins 70% en présence d'un tel couple d'amorçage.

Ainsi, un premier objet de la présente invention consiste en un système d'amorçage de la polymérisation anionique de (méth)acrylates et, le cas échéant, de comonomères vinyliques, comprenant au moins un amorceur de formule R-M(I) dans laquelle M désigne un métal choisi parmi les métaux alcalins et alcalinoterreux et R désigne un radical alkyle à chaîne droite ou ramifiée contenant de 2 à 6 atomes de carbone ou un radical aryle ou un radical arylalkyle, caractérisé en ce qu'il comprend en outre au moins un alcoolate de métal alcalin de formule $R_1OM_1$ dans laquelle $R_1$ désigne un radical alkyle à chaîne droite ou ramifiée contenant de 1 à 6 atomes de carbone ou un radical aryle ou un radical arylalkyle et $M_1$ désigne un métal alcalin, avec la condition que lorsque $M_1$ est le lithium, alors R désigne un radical aryle ou arylalkyle. Dans le système d'amorçage de polymérisation selon l'invention, $M_1$ est de préférence choisi parmi le sodium, le potassium, le rubidium et le césium. Lorsque $M_1$ est le lithium, l'amorceur de formule (I) peut être choisi notamment parmi les composés de formule :

$(C_6H_5)_2$ CHM

dans laquelle M est choisi parmi le lithium, le sodium et le potassium, ainsi que parmi le 1,1-diphényl-3-méthylpentyl-lithium, le 1,1-diphényl hexyllithium et l'alphaméthylstyryl lithium. Lorsque $M_1$ n'est pas le lithium, on peut ajouter à cette liste des composés tels que le n-butyllithium, le 1,4-disodio-1,1,4,4-tétraphénylbutane, le n-butylsodium ou le sec-butyllithium. Le rapport molaire de l'alcoolate de métal alcalin à l'amorceur dans le système d'amorçage selon l'invention peut varier dans des limites très larges. Toutefois, l'obtention de résultats spécifiques dans la polymérisation des (méth)acrylates est généralement subordonnée à la sélection d'un rapport molaire compris entre 0,3 environ et 25 environ, quoique des quantités supérieures d'alcoolate ne puissent être nuisibles. En vue de la résolution des problèmes auxquels s'adresse la présente invention, la quantité d'alcoolate doit être suffisante pour permettre la formation d'un complexe avec le centre actif de polymérisation et, de la sorte, pour stabiliser ce dernier.

Un second objet de la présente invention consiste en un procédé de polymérisation de (méth)acrylates et éventuellement de comonomères vinyliques à l'aide d'au moins un amorceur de formule R - M (I) dans laquelle M désigne un métal choisi parmi les métaux alcalins et alcalino-terreux et R désigne un radical alkyle à chaîne droite ou ramifiée contenant 2 à 6 atomes de carbone ou un radical aryle ou un radical arylalkyle, caractérisé en ce que la polymérisation est effectuée en présence en outre d'au moins un alcoolate de métal alcalin de formule $R_1 OM_1$, dans laquelle $R_1$ désigne un radical alkyle à chaîne droite ou ramifiée contenant de 1 à 6 atomes de carbone ou un radical aryle ou un radical arylalkyle et $M_1$ désigne un métal alcalin, avec la condition que lorsque $M_1$ est le lithium, alors R désigne un radical aryle ou arylalkyle.

l'amorceur de formule (I) et l'alcoolate de métal alcalin forment ensemble un système d'amorçage de polymérisation conforme au premier objet de la présente invention et pour lequel on se reportera à la description détaillée ci-dessus.

Des amorceurs de formule R-M (I) qui peuvent être utilisés dans le procédé selon l'invention sont notamment le diphénylméthylsodium, le diphénylméthylpotassium et le 1,4-disodio-1,1,4,4- tétraphénylbutane, l'alphaméthylstyryl-lithium et le diphénylméthyllithium.

Le procédé selon l'invention est particulièrement avantageux pour l'obtention de polymères comprenant une séquence d'acrylate d'alkyle primaire, ledit acrylate étant notamment choisi parmi ceux dont le groupe alkyle, le cas échéant substitué par au moins un atome d'halogène comme le chlore ou le fluor, contient de 1 à 8 atomes de carbone, plus particulièrement l'acrylate de méthyle, l'acrylate d'éthyle, l'acrylate de n-propyle, l'acrylate de n-butyle, l'acrylate de n-hexyle, l'acrylate de 2,2,2-trifluoro-éthyle ou l'acrylate de 2-éthylhexyle. Dans ce cas, il permet la préparation de séquences ayant un poids moléculaire moyen en nombre comprise entre 2 000 et 200 000 environ et un indice de polydispersité des masses moléculaires (défini comme le rapport de la masse moléculaire moyenne en poids à la masse moléculaire moyenne en nombre), et déterminé par chromatographie d'exclusion généralement compris entre 1,2 et 3,5 environ.

Le procédé selon l'invention peut également être utilisé pour la polymérisation d'acrylates d'alkyle secondaire ou tertiaire, tels que ceux d'isopropyle, de sec.-butyle ou de tertiobutyle, de monomères méthacryliques et encore de comonomères vinyliques non-acryliques. Comme comonomère vinylique non-acrylique on peut citer notamment le butadiène, l'isoprène, la vinyl-2-pyridine, la vinyl-4 pyridine et les monomères vinyl-aromatiques.

Par monomère méthacrylique au sens de la présente invention, on entend un monomère choisi parmi les méthacrylates d'alkyle dont le radical alkyle, le cas échéant substitué, par exemple par au moins un atome d'halogène comme le chlore ou le fluor, contient 1 à 18 atomes de carbone, comme les méthacrylates de méthyle, d'éthyle, de 2,2,2-trifluoro-éthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, ainsi que le méthacrylate de glycidyle, le méthacrylate de norbornyle, le méthacrylonitrile et les dialkyl-méthacrylamides.

Par monomère vinylaromatique au sens de la présente invention, on entend un monomère aromatique à insaturation éthylénique tel que le styrène, le vinyl-toluène, l'alphaméthylstyrène, le méthyl-4 styrène, le méthyl-3 styrène, le méthoxy-4 styrène, l'hydroxyméthyl-2 styrène, l'éthyl-4 styrène, l'éthoxy-4 styrène, le diméthyl-3,4 styrène, le chloro-2 styrène, le chloro-3 styrène, le chloro-4 méthyl-3 styrène, le tert.-butyl-3 styrène, le dichloro-2,4 styrène, le dichloro-2,6 styrène et le vinyl-1 naphtalène.

En particulier le procédé selon l'invention permet la préparation d'un copolymère biséquencé de structure A-B dans laquelle A représente une séquence de monomère méthacrylique, d'acrylate d'alkyle secondaire ou tertiaire ou de monomère vinylaromatique, et B représente une séquence d'un acrylate d'alkyle primaire, le poids moléculaire moyen en nombre de la séquence A étant compris entre 2 000 et 300 000 environ, le poids moléculaire moyen en nombre de la séquence B étant compris entre 2 000 et 200 000 environ et l'indice de polydispersité du copolymère biséquencé étant compris entre 1,2 et 2,2 environ. Il est alors caractérisé en ce que :

(1) dans une première étape, on conduit la polymérisation anionique d'un monomère A à l'aide d'un système initiateur comprenant au moins un amorceur de formule R-M (I) dans laquelle M désigne un métal choisi parmi les métaux alcalins et alcalino-terreux et R désigne un radical alkyle à chaîne droite ou ramifié contenant de 2 à 6 atomes de carbone ou un radical aryle ou un radical arylalkyle et au moins un alcoolate de métal alcalin de formule $R_1OM_1$ dans laquelle $R_1$ désigne un radical alkyle à chaîne droite ou ramifié contenant de 1 à 6 atomes de carbone ou un radical aryle ou un radical arylalkyle et $M_1$ désigne un métal alcalin, avec la condition que lorsque $M_1$ est le lithium, alors R désigne un radical aryle ou arylalkyle, de manière à obtenir un chaînon vivant de la séquence polymère A, puis

(2) dans une seconde étape, on fait réagir le chaînon vivant ainsi obtenu avec un monomère B en présence du système initiateur de la première étape.

La proportion d'alcoolate alcalin utilisé dans le procédé selon l'invention dépend de l'amorceur choisi mais aussi du (des) monomère(s) à polymériser. Ainsi pour la polymérisation d'un monomère tel que le méthacrylate de méthyle ou un acrylate d'alkyle primaire, une proportion molaire d'alcoolate comprise entre 0,3 et 15 environ vis-à-vis de l'amorceur est généralement satisfaisante. Pour la préparation de copolymères biséquencés tels que décrits précédemment, on choisit de préférence un rapport molaire alcoolate/amorceur compris entre 2 et 25 environ, quoique des quantités supérieures d'alcoolate ne puissent être nuisibles.

Dans le procédé suivant l'invention, la polymérisation ou copolymérisation s'effectue de préférence en l'absence d'humidité et d'oxygène, et en présence d'au moins un solvant choisi de préférence parmi les solvants aromatiques, tels que benzène et toluène, ou bien le tétra-hydrofuranne, le diglyme, le tétraglyme, l'orthoterphényle, le biphényle, la décaline ou encore la tétraline.

La température de polymérisation peut varier entre -80°C et +60°C environ, notamment dans le cas du méthacrylate de méthyle, et de préférence entre -80°C et +10°C environ pour la plupart des autres monomères et notamment pour les polymérisations séquencées. Enfin, l'amorceur est généralement utilisé dans un rapport molaire, vis-à-vis de la somme des monomères A et B, ne dépassant pas $10^{-2}$ environ et de préférence compris entre $3.10^{-4}$ et $10^{-2}$.

Le procédé selon l'invention permet également de préparer des polyméthacrylates d'alkyle, tels que définis précédemment, ayant une masse moléculaire moyenne en nombre généralement comprise entre 7 000 et 150 000 environ et un indice de polydispersité des masses moléculaires, défini et déterminé comme précédemment, généralement compris entre 1,05 et 2,0 environ. Ces polyméthacrylates sont non-réticulés et comprennent généralement jusqu'à 60% de triades isotactiques, de 5 à 50% de triades hétérotactiques et de 25 à 60% de triades syndiotactiques.

Les exemples suivants sont donnés à titre illustratif et non limitatif de la présente invention.

Dans tous ces exemples, la chromatographie d'exclusion a été effectuée en utilisant un appareil WATERS GPC 501 équipé de deux colonnes linéaires, avec le tétrahydrofuranne comme éluant à un débit de 1 ml/min. Les masses moléculaires moyennes en nombre ont été déterminées au moyen d'un osmomètre à membrane HP 502.

## EXEMPLE 1

Dans un ballon préalablement séché et sous atmosphère d'azote, on introduit $0,72.10^{-3}$ mole de tertiobutylate de sodium préalablement purifié par lyophilisation dans le benzène puis conservé sous atmosphère inerte en l'absence de lumière. On y ajoute 100 ml de toluène préséché et, sous agitation, au goutte à goutte, $0,2.10^{-3}$ mole de 1,4-disodio-1,1,4,4-tétraphénylbutane en solution 0,2 molaire dans le toluène. On porte le mélange à la température de -78°C au moyen d'un mélange d'acétone et de carboglace puis on ajoute, toujours à -78°C, 10 ml d'une solution comprenant 0,04 mole d'acrylate de n-butyle dans le toluène, ledit acrylate ayant été préalablement agité sur hydrure de calcium pendant 48 heures, distillé puis traité sur fluorényllithium jusqu'à apparition d'une couleur jaune persistante et enfin distillé sur triéthylaluminium immédiatement avant la polymérisation.

On arrête la réaction après 60 minutes par addition de 5 ml de méthanol, après quoi on chasse le solvant. On obtient le polyacrylate de n-butyle avec un rendement de 89%. L'analyse du polymère par chromatographie d'exclusion montre les caractéristiques suivantes :

| | |
|---|---|
| $M_n$ (masse moléculaire moyenne en nombre) | 32 000 |
| $M_w/M_n$ (indice de polydispersité) | 2,6 |

4

EXEMPLE 2

On reproduit l'expérience de l'exemple 1 en remplaçant le 1,4-disodio-1,1,4,4-tétraphénylbutane par $0,2.10^{-3}$ mole de diphénylméthylpotassium et en utilisant $10^{-2}$ mole de tertiobutylate de sodium. Après 60 minutes de réaction, on obtient le polyacrylate de n-butyle avec un rendement de 91%. L'analyse du polymère par chromatographie d'exclusion montre les caractéristiques suivantes :

$M_n$ = 44 000     $M_w/M_n$ = 2,4

EXEMPLE 3

On reproduit l'expérience de l'exemple 2 en utilisant $0,2.10^{-3}$ mole de diphénylméthylpotassium et $0,7.10^{-3}$ mole de tertiobutylate de sodium et en ajoutant successivement 0,03 mole de méthacrylate de tertiobutyle, puis 0,10 mole d'acrylate de n-butyle. Après 240 minutes de réaction, on obtient un copolymère séquencé avec un rendement de 75%. L'analyse du polymère par chromatographie d'exclusion montre les caractéristiques suivantes :

| Séquence Poly(t-BuMA) | $M_n$ = 24 000 | $M_w/M_n$ = 1,4 |
|---|---|---|
| Séquence Poly(n-BuA) | $M_n$ = 24 000 | $M_w/M_n$ = 3,1 |

EXEMPLE 4

On reproduit la procédure expérimentale de l'exemple 1 tout en ajustant les conditions et les ingrédients comme suit :
- alcoolate : $9,4.10^{-3}$ mole de tertiobutylate de sodium
- amorceur : $0,94.10^{-3}$ mole de diphénylméthylsodium
- monomère : 4,7 g de méthacrylate de méthyle
- solvant : 100 ml de toluène
- température de polymérisation : + 23°C
- durée de polymérisation : 5 minutes.

Dans ces conditions, on obtient avec un rendement de 100% un polyméthacrylate de méthyle possédant les caractéristiques suivantes :

$M_n$ = 13 500     $M_w/M_n$ = 1,18

EXEMPLE 5

On reproduit l'expérience de l'exemple 4 en remplaçant le tertiobutylate de sodium par le tertiobutylate de lithium et le diphénylméthylsodium par le diphénylméthyllithium. On obtient avec un rendement de 94% un polyméthacrylate de méthyle possédant les caractéristiques suivantes :

$M_n$ = 11 000     $M_w/M_n$ = 1,6

EXEMPLE 6

On reproduit la procédure expérimentale de l'exemple 1 tout en ajustant les conditions et les ingrédients comme suit :
- alcoolate : $0,5.10^{-3}$ mole de tertiobutylate de sodium
- amorceur : $10^{-3}$ mole de diphénylméthylsodium
- monomère : 4,7 g de méthacrylate de méthyle
- solvant : 100 ml de toluène
- température de polymérisation : -30°C
- durée de polymérisation : 10 minutes.

Dans ces conditions, on obtient avec un rendement de 100% un polyméthacrylate de méthyle possédant les caractéristiques suivantes :

5

$M_n$ = 7 000     $M_w/M_n$ = 1,3

Sa microstructure peut être décrite comme suit :

| triades syndiotactiques | 13,6% |
|---|---|
| triades hétérotactiques | 35,7% |
| triades isotactiques | 50,7%. |

EXEMPLE 7

On reproduit l'expérience de l'exemple 6, à l'exception de la quantité d'alcoolate qui est portée à $10^{-2}$ mole. On obtient avec un rendement de 100% un polyméthacrylate de méthyle possédant les caractéristiques suivantes :

$M_n$ = 9 500     $M_w/M_n$ = 1,05

Sa microstructure peut être décrite comme suit :

| triades syndiotactiques | 44,6% |
|---|---|
| triades hétérotactiques | 38,7% |
| triades isotactiques | 16,7% |

EXEMPLE 8

On reproduit la procédure expérimentale de l'exemple 1 tout en ajustant les conditions et les ingrédients comme suit :
- alcoolate : $2.10^{-3}$ mole de tertiobutylate de sodium
- amorceur : $0,2.10^{-3}$ mole de diphénylméthylsodium
- monomère : 5 g de méthacrylate de méthyle
- solvant : 100 ml de tétrahydrofuranne
- température de polymérisation : -50°C
- durée de polymérisation : 5 minutes.

Dans ces conditions, on obtient avec un rendement de 100% un polyméthacrylate de méthyle possédant les caractéristiques suivantes :

$M_n$ = 26 500     $M_w/M_n$ = 1,4

Sa microstructure peut être décrite comme suit :

| triades syndiotactiques | 54,3% |
|---|---|
| triades hétérotactiques | 41,3% |
| triades isotactiques | 4,2% |

EXEMPLE 9

On reproduit la procédure expérimentale de l'exemple 1 tout en ajustant les conditions et les ingrédients comme suit :
- alcoolate : $2,2.10^{-3}$ mole de tertiobutylate de lithium
- amorceur : $0,2.10^{-3}$ mole de diphénylméthyl lithium
- monomère : 3,8 g de méthacrylate de méthyle
- solvant : 100 ml de toluène
- température de polymérisation : -30°C

- durée de polymérisation : 10 minutes.

Dans ces conditions, on obtient avec un rendement de 100% un polyméthacrylate de méthyle possédant les caractéristiques suivantes :

$M_n$ = 89 000     $M_w/M_n$ = 1,35

EXEMPLE 10

On reproduit la procédure expérimentale de l'exemple 1 tout en ajustant les conditions et les ingrédients comme suit :
- alcoolate : $2,5.10^{-3}$ mole de tertiobutylate de lithium
- amorceur : $0,25.10^{-3}$ mole d'alphaméthylstyryl lithium
- monomères : 5 g de styrène, puis 5 g de méthacrylate de méthyle
- solvant : mélange de 70 ml de toluène et de 30 ml de tétrahydrofuranne
- température de polymérisation : -40°C
- durée de polymérisation : 60 minutes pour le styrène puis 30 minutes pour le méthacrylate de méthyle.

Dans ces conditions, on obtient avec un rendement de 72% un copolymère à blocs dont la séquence polystyrène possède les caractéristiques suivantes :

$M_n$ = 26 000     $M_w/M_n$ = 1,10

et dont la séquence polyméthacrylate de méthyle possède les caractéristiques suivantes :

$M_n$ = 30 000     $M_w/M_n$ = 1,10

EXEMPLE 11

On reproduit la procédure expérimentale de l'exemple 4, à l'exception de la température de polymérisation qui est portée à +45°C. On obtient avec un rendement de 100% un polyméthacrylate de méthyle possédant les caractéristiques suivantes :

$M_n$ = 13 500     $M_w/M_n$ = 2,0

EXEMPLE 12

On reproduit la procédure expérimentale de l'exemple 1 tout én ajustant les conditions et ingrédients comme suit :
- amorceur : $0,86.10^{-3}$ mole de n-butylsodium
- alcoolate : $8,6.10^{-3}$ mole de tertiobutylate de sodium
- monomère : 5 ml d'acrylate de n-butyle
- solvant : 100 ml de toluène
- durée de polymérisation : 30 minutes.
- température de polymérisation : -78°C

Dans ces conditions, on obtient avec un rendement de 71% un polyacrylate de n-butyle possédant les caractéristiques suivantes :

$M_n$ = 29 000     $M_w/M_n$ = 2,8

EXEMPLE 13

On reproduit la procédure expérimentale de l'exemple 12, aux exceptions suivantes près :
- amorceur : $0,4.10^{-3}$ mole de diphénylméthylsodium
- alcoolate : $4.10^{-3}$ mole de tertiobutylate de sodium
- solvant : mélange de 12 ml de tétrahydrofuranne et 28 ml de toluène

Dans ces conditions, on obtient avec un rendement de 85% un polyacrylate de n-butyle possédant les caractéristiques suivantes :

$M_n$ = 37 500      $M_w/M_n$ = 2,5

EXEMPLE 14

On reproduit la procédure expérimentale de l'exemple 12, aux exceptions suivantes près :
- amorceur : $1,25.10^{-3}$ mole de diphénylhexylsodium
- alcoolate : $12,5.10^{-3}$ mole de tertiobutylate de sodium
- solvant : mélange de 5 ml de tétrahydrofuranne et 100 ml de toluène

Dans ces conditions, on obtient avec un rendement de 71% un polyacrylate de n-butyle possédant les caractéristiques suivantes :

$M_n$ = 82 000      $M_w/M_n$ = 2,7

EXEMPLE 15

Dans un mélange de 90 ml de toluène et 10 ml de tétrahydrofuranne, on polymérise d'abord 5 g de styrène à 0°C pendant 1 heure en présence d'un système comprenant $10^{-3}$ mole de n-butylsodium et $10^{-2}$ mole de tertiobutylate de sodium. L'analyse de la séquence polymère obtenue à ce stade montre la formation de polysytyrène ayant les caractéristiques suivantes :

$M_n$ = 20 300      $M_w/M_n$ = 1,1

Le milieu est alors refroidi à la température de -78°C avant d'y ajouter $1,4.10^{-3}$ mole de diphénylethylène puis 8 g d'acrylate de n-butyle dilué dans 10 ml de toluène. Après avoir poursuivi la polymérisation à -78°C pendant 2 heures, on obtient avec un rendement de 73% un copolymère biséquencé possédant les caractéristiques suivantes :

$M_n$ = 28 500      $M_w/M_n$ = 1,3

EXEMPLE 16

On reproduit la procédure expérimentale de l'exemple 1 tout en ajustant les conditions et les ingrédients comme suit :
- alcoolate : $5.10^{-3}$ mole de tertiobutylate de potassium
- amorceur : $10^{-3}$ mole de diphénylméthylpotassium
- monomère : 0,04 mole d'acrylate de n-butyle
- solvant : 50 ml de tétrahydrofuranne
- température de polymérisation : -78°C
- durée de polymérisation : 10 minutes.

Dans ces conditions, on obtient avec un rendement de 95% un polyacrylate de n-butyle possédant les caractéristiques suivantes :

$M_n$ = 4 500      $M_w/M_n$ = 1,8

EXEMPLE 17

On reproduit l'expérience de l'exemple 6, aux exceptions suivantes près :
- amorceur : $2.10^{-3}$ mole de diphénylméthyllithium
- alcoolate : $20,8.10^{-3}$ mole de tertiobutylate de lithium
- monomère : 4 g de méthacrylate de méthyle
- solvant : 100 ml de toluène

Dans ces conditions, on obtient avec un rendement de 100% un polyméthacrylate de méthyle possédant les caractéristiques et la microstructure suivantes :

$M_n$ = 7 800      $M_w/M_n$ = 1,3

| triades syndiotactiques | 32,1% |
|---|---|
| triades hétérotactiques | 10,2% |
| triades isotactiques | 57,7% |

EXEMPLE 18

Dans un mélange de 90 ml de toluène et 10 ml de tétrahydrofuranne, on polymérise d'abord 5 g de styrène à 0°C pendant 30 minutes en présence d'un système comprenant $10^{-3}$ mole de n-butylsodium et $10^{-2}$ mole de tertiobutylate de sodium. L'analyse de la séquence polymère obtenue à ce stade montre la formation de polysytyrène ayant les caractéristiques suivantes :

$M_n$ = 23 500    $M_w/M_n$ = 1,07

On ajoute alors au milieu réactionnel $1,05.10^{-3}$ mole de diphényléthylène puis 5 g de méthacrylate de méthyle. Après avoir poursuivi la polymérisation à 0°C pendant 15 minutes, on obtient avec un rendement de 100% un copolymère biséquencé possédant les caractéristiques suivantes :

$M_n$ = 50 600    $M_w/M_n$ = 1,18

EXEMPLES 19 à 30

Dans un ballon préalablement séché et sous atmosphère d'azote, on introduit le tertiobutanolate de métal alcalin M préalablement purifié par lyophilisation dans le benzène puis conservé sous atmosphère inerte en l'absence de lumière. On y ajoute 100 ml d'un solvant ou mélange de solvants (200 ml pour les exemples 25 et 26) comprenant x% de tétrahydrofuranne et (100-x)% de toluène, le(s) solvant(s) étant préséché(s), et au goutte à goutte sous agitation l'amorceur en solution 0,2 molaire dans le tétrahydrofuranne. Les quantités molaires de tertiobutanolate et d'amorceur, ainsi que la nature du métal alcalin $M_1$ et de l'amorceur et la valeur x sont indiquées dans le tableau I ci-après. On porte le mélange à la température T (exprimée en degrés Celsius) puis on ajoute, à cette température, du méthacrylate de méthyle préalablement agité sur hydrure de calcium pendant 48 heures, distillé puis traité sur triéthylaluminium immédiatement avant la polymérisation.

Après 30 minutes de réaction, on effectue un prélèvement de la solution afin d'analyser la première séquence polymère obtenue par chromatographie d'exclusion. On ajoute ensuite dans le réacteur de l'acrylate de 2-éthylhexyle préalablement agité 48 heures sur hydrure de calcium, distillé puis traité sur fluorényllithium, jusqu'à apparition d'une couleur jaune et enfin distillé sur triéthylaluminium immédiatement avant la polymérisation. On polymérise alors l'acrylate de 2-éthylhexyle pendant une heure, toujours à la température T. On arrête la réaction par addition de 2 ml de méthanol acidifié après quoi on précipite le produit dans un excès de méthanol. Après séchage sous vide à 80°C, on obtient le copolymère biséquencé avec le rendement R (exprimé en pourcentage) indiqué au tableau I. La valeur de T ainsi que les quantités molaires de méthacrylate de méthyle (MAM) et d'acrylate de 2-éthylhexyle (AEH) figurent également au tableau I, ainsi que la masse moléculaire moyenne en nombre ($M_n$) exprimée en milliers et la polydispersité ($M_w/M_n$) de la séquence obtenue à l'issue de la première étape et du polymère biséquencé global. Le tableau I illustre donc la variété des polymères biséquencés qui peuvent être obtenus en faisant varier des paramètres réactionnels tels que $M_1$, x, T et les quantités molaires des différents ingrédients.

## TABLEAU I

| Exemple | tertiobutanolate | | amorceur | | x | T |
|---|---|---|---|---|---|---|
| | $M_1$ | mole | nature | mole | | |
| 19 | Na | $3.10^{-3}$ | $\phi_2CHNa$ | $5.10^{-4}$ | 0 | -78 |
| 20 | Na | $3.10^{-3}$ | $\phi_2CHNa$ | $5.10^{-4}$ | 100 | -78 |
| 21 | K | $3.10^{-3}$ | $\phi_2CHK$ | $5.10^{-4}$ | 0 | -78 |
| 22 | K | $3.10^{-3}$ | $\phi_2CHK$ | $5.10^{-4}$ | 0 | -30 |
| 23 | Li | $3,2.10^{-3}$ | DPHLi | $5.10^{-4}$ | 0 | -78 |
| 24 | Li | $3,2.10^{-3}$ | DPHLi | $5.10^{-4}$ | 0 | -30 |
| 25 | Li | $3,5.10^{-3}$ | DPHLi | $3,5.10^{-4}$ | 0 | -78 |
| 26 | Li | $8.10^{-3}$ | DPHLi | $5.10^{-4}$ | 0 | -78 |
| 27 | Li | $8.10^{-3}$ | DPHLi | $5.10^{-4}$ | 50 | -78 |
| 28 | Li | $3,2.10^{-3}$ | DPHLi | $5.10^{-4}$ | 100 | -78 |
| 29 | Li | $3,2.10^{-3}$ | DPHLi | $5.10^{-4}$ | 100 | -30 |
| 30 | Li | $6,4.10^{-3}$ | DPHLi | $2,5.10^{-4}$ | 100 | -78 |

$\phi_2CHNa$ : diphénylméthylsodium

$\phi_2CHK$ : diphénylméthylpotassium

DPHLi : diphénylhexyllithium

TABLEAU I (suite)

| Exemple | MAM (mole) | AEH (mole) | R | 1ère séquence | | biséquencé | |
|---|---|---|---|---|---|---|---|
| | | | | $M_n$ | $M_w/M_n$ | $M_n$ | $M_w/M_n$ |
| 19 | $4,5.10^{-2}$ | $2,4.10^{-2}$ | 100 | nd | nd | 36 | 2,0 |
| 20 | $4,5.10^{-2}$ | $2,4.10^{-2}$ | 60 | 8,5 | 1,2 | 12 | 1,3 |
| 21 | $4,5.10^{-2}$ | $2,4.10^{-2}$ | 100 | 20 | 1,4 | 32 | 2,1 |
| 22 | $4,5.10^{-2}$ | $2,4.10^{-2}$ | 89 | 16 | 1,7 | 21 | 2,1 |
| 23 | $4,5.10^{-2}$ | $2,4.10^{-2}$ | 98 | 19 | 1,2 | 29 | 1,5 |
| 24 | $4,5.10^{-2}$ | $2,5.10^{-2}$ | 81 | 15 | 1,3 | 19 | 1,4 |
| 25 | $4,5.10^{-2}$ | $7,3.10^{-2}$ | 100 | 26 | 1,2 | 65 | 1,6 |
| 26 | $4,5.10^{-2}$ | $7,3.10^{-2}$ | 98 | 15 | 1,4 | 40 | 1,7 |
| 27 | $4,5.10^{-2}$ | $2,4.10^{-2}$ | 93 | 16 | 1,3 | 28 | 1,3 |
| 28 | $4,5.10^{-2}$ | $2,4.10^{-2}$ | 83 | 13 | 1,1 | 50[*] | 1,15[*] |
| 29 | $4,5.10^{-2}$ | $2,4.10^{-2}$ | 54 | 12 | 1,5 | 16 | 1,5 |
| 30 | $4,5.10^{-2}$ | $2,5.10^{-2}$ | 76 | 30 | 1,2 | 40 | 1,3 |

nd : non déterminé

(*)    après fractionnement du produit obtenu à l'issue de la seconde étape, la chromatographie de celui-ci faisant apparaître une répartition bimodale : le produit comprend 65% en poids de copolymère biséquencé et 35% d'homopolymère de méthacrylate de méthyle.

**Revendications**

**Revendications pour les Etats contractants suivants : AT, BE, CH, DE, DK, FR, GB, GR, IT, LI, LU, NL, SE**

1. Système d'amorçage de la polymérisation anionique de monomères acryliques et le cas échéant de comonomères vinyliques, comprenant au moins un amorceur de formule R-M (I) dans laquelle M désigne un métal choisi parmi les métaux alcalins et alcalino-terreux et R désigne un radical alkyle à chaîne droite ou ramifiée contenant 2 à 6 atomes de carbone ou un radical aryle ou un radical arylalkyle, caractérisé en ce que la polymérisation est effectuée en présence en outre d'au moins un alcoolate de métal alcalin de formule $R_1OM_1$, dans laquelle $R_1$ désigne un radical alkyle à chaîne droite ou ramifiée contenant de 1 à 6 atomes de carbone ou un radical aryle ou un radical aryalkyle et $M_1$ désigne un métal alcalin, avec la condition que lorsque $M_1$ est le lithium, alors R désigne un radical aryle ou arylalkyle.

2. Système d'amorçage selon la revendication 1, caractérisé en ce que le rapport molaire

$$\frac{\text{alcoolate}}{\text{amorceur}}$$

est compris entre 0,3 et 25.

3. Procédé de polymérisation d'acrylates d'alkyle primaire, secondaire ou tertiaire ou de monomères méthacryliques, et éventuellement de comonomères vinyliques, caractérisé en ce que la polymérisation est effectuée en présence d'un système d'amorçage selon l'une des revendications 1 et 2.

4. Procédé selon la revendication 3, caractérisé en ce qu'on effectue la polymérisation à une température entre -80°C et +60°C.

5. Procédé selon l'une des revendications 3 et 4, caractérisé en ce que la polymérisation est effectuée en présence d'au moins un solvant.

6. Procédé selon la revendication 5, caractérisé en ce que le solvant est le tétrahydrofuranne.

7. Procédé selon la revendication 5, caractérisé en ce que le solvant est le toluène.

8. Procédé selon l'une des revendications 3 à 7, caractérisé en ce qu'il conduit à l'obtention d'un polymère comprenant une séquence d'acrylate d'alkyle primaire ayant un poids moléculaire moyen en nombre compris entre 2 000 et 200 000 et un indice de polydispersité compris entre 1,2 et 3,5.

9. Copolymère biséquencé obtenu par le procédé tel que défini à l'une des revendications 3 à 7, de structure A-B dans laquelle A représente une séquence de monomère méthacrylique, d'acrylate d'alkyle secondaire ou tertiaire ou de monomère vinylaromatique, et B représente une séquence d'un acrylate d'alkyle primaire, le poids moléculaire moyen en nombre de la séquence A étant compris entre 2000 et 300 000, le poids moléculaire moyen en nombre de la séquence B étant compris entre 2000 et 200 000 et l'indice de polydispersité du copolymère biséquencé étant compris entre 1,2 et 2,2.

10. Procédé d'obtention du copolymère biséquencé tel que défini à la revendication 9, caractérisé par le fait que :
(1) dans une première étape, on conduit la polymérisation anionique d'un monomère A à l'aide du système d'amorçage tel que défini à l'une des revendications 1 et 2, de manière à obtenir un chaînon vivant de la séquence polymère A, puis
(2) dans une seconde étape, on fait réagir le chaînon vivant ainsi obtenu avec un monomère B en présence du système d'amorçage de la première étape.

**Revendications pour l'Etat contractant suivant : ES**

1. Procédé de polymérisation d'acrylates d'alkyle primaire, secondaire ou tertiaire ou de monomères méthacryliques, et éventuellement de comonomères vinyliques, comprenant au moins un amorceur de formule R-M (I) dans laquelle M désigne un métal choisi parmi les métaux alcalins et alcalino-terreux et R désigne un radical alkyle à chaîne droite ou ramifiée contenant 2 à 6 atomes de carbone ou un radical aryle ou un radical arylalkyle, caractérisé en ce que la polymérisation est effectuée en présence en outre d'au moins un alcoolate de métal alcalin de formule $R_1OM_1$ dans laquelle $R_1$ désigne un radical alkyle à chaîne droite ou ramifiée contenant de 1 à 6 atomes de carbone ou un radical aryle ou un radical arylalkyle et $M_1$ désigne un métal alcalin, avec la condition que lorsque $M_1$ est le lithium, alors R désigne un radical aryle ou arylalkyle.

**2.** Procédé selon la revendication 1, caractérisé en ce que le rapport molaire

$$\frac{\text{alcoolate}}{\text{amorceur}}$$

est compris entre 0,3 et 25.

**3.** Procédé selon l'une des revendication 1 et 2, caractérisé en ce qu'on effectue la polymérisation à une température entre -80°C et +60°C.

**4.** Procédé selon l'une des revendications 1 à 3, caractérisé en ce que la polymérisation est effectuée en présence d'au moins un solvant.

**5.** Procédé selon la revendication 4, caractérisé en ce que le solvant est le tétrahydrofuranne.

**6.** Procédé selon la revendication 4, caractérisé en ce que le solvant est le toluène.

**7.** Procédé selon l'une des revendications 1 à 6, caractérisé en ce qu,il conduit à l'obtention d'un polymère comprenant une séquence d'acrylate d'alkyle primaire ayant un poids moléculaire moyen en nombre compris entre 2 000 et 200 000 et un indice de polydispersité compris entre 1,2 et 3,5.

**8.** Procédé de polymérisation selon l'une des revendications 1 à 6, caractérisé par le fait qu'il conduit à un copolymère biséquencé de structure A-B dans laquelle A représente une séquence de monomère méthacrylique, d'acrylate d'alkyle secondaire ou tertiaire ou de monomère vinylaromatique, et B représente une séquence d'un acrylate d'alkyle primaire, le poids moléculaire moyen en nombre de la séquence A étant compris entre 2 000 et 300 000, le poids moléculaire moyen en nombre de la séquence B étant compris entre 2 000 et 200 000 et l'indice de poly-dispersité du copolymère biséquencé étant compris entre 1,2 et 2,2, et qu'à cet effet :
(1) dans une première étape, on conduit la polymérisation anionique d'un monomère A à l'aide du système initiateur précité, de manière à obtenir un chaînon vivant de la séquence polymère A, puis
(2) dans une seconde étape, on fait réagir le chaînon vivant ainsi obtenu avec un monomère B en présence du système initiateur de la première étape.

**Claims**
**Claims for the following Contracting States : AT, BE, CH, DE, DK, FR, GB, GR, IT, LI, LU, NL, SE**

**1.** Initiating system for the anionic polymerisation of acrylic monomers and, if appropriate, of vinyl comonomers, comprising at least one initiator of formula R-M (I) in which M denotes a metal chosen from alkali and alkaline-earth metals and R denotes a straight- or branched-chain alkyl radical containing 2 to 6 carbon atoms or an aryl radical or an arylalkyl radical, characterised in that the polymerisation is carried out in the additional presence of at least one alkali metal alcoholate of formula $R_1OM_1$ in which $R_1$ denotes a straight- or branched-chain alkyl radical containing from 1 to 6 carbon atoms or an aryl radical or an arylalkyl radical, and $M_1$ denotes an alkali metal, with the condition that, when $M_1$ is lithium, then R denotes an aryl or arylalkyl radical.

**2.** Initiating system according to Claim 1, characterised in that the alcoholate/initiator molar ratio is between 0.3 and 25.

**3.** Process for the polymerisation of primary, secondary or tertiary alkyl acrylates or of methacrylic monomers and optionally of vinyl comonomers, characterised in that the polymerisation is carried out in the presence of an initiating system according to either of Claims 1 and 2.

**4.** Process according to Claim 3, characterised in that the polymerisation is carried out at a temperature of between -80°C and +60°C.

13

5. Process according to either of Claims 3 and 4, characterised in that the polymerisation is carried out in the presence of at least one solvent.

6. Process according to Claim 5, characterised in that the solvent is tetrahydrofurane.

7. Process according Claim 5, characterised in that the solvent is toluene.

8. Process according to either of Claims 3 to 7, characterised in that it results in obtaining a polymer containing a primary alkyl acrylate block which has a number-average molecular weight of between 2,000 and 200,000 and a polydispersity index of between 1.2 and 3.5.

9. Diblock copolymer obtained by the process as defined in either of Claims 3 to 7, of structure A-B in which A denotes a block of methacrylic monomer, of secondary or tertiary alkyl acrylate or of vinylaromatic monomer, and B denotes a primary alkyl acrylate block, the number-average molecular weight of the block A being between 2,000 and 300,000, the number-average molecular weight of the block B being between 2,000 and 200,000, and the polydispersity index of the diblock copolymer being between 1.2 and 2.2.

10. Process for obtaining a diblock copolymer as defined in Claim 9, characterised in that :
(1) in a first stage, the anionic polymerisation of a monomer A is conducted with the aid of the initiating system as defined in either of Claim 1 and 2, so as to obtain a living chain unit of the polymer block A, and then
(2) in a second stage, the living chain unit thus obtained is reacted with a monomer B in the presence of the initiating system of the first stage.

**Claims for the following Contracting state : ES**

1. Process for the polymerisation of primary, secondary or tertiary alkyl acrylates or of methacrylic monomers and optionally of vinyl comonomers, comprising at least one initiator of formula R-M (I) in which M denotes a metal chosen from alkali and alkaline-earth metals and R denotes a straight- or branched-chain alkyl radical containing 2 to 6 carbon atoms or an aryl radical or an arylalkyl radical, characterised in that the polymerisation is carried out in the additional presence of at least one alkali metal alcoholate of formula $R_1OM_1$ in which $R_1$ denotes a straight- or branched-chain alkyl radical containing from 1 to 6 carbon atoms or an aryl radical or an arylalkyl radical, and $M_1$ denotes an alkali metal, with the condition that, when $M_1$ is lithium, then R denotes an aryl or arylalkyl radical.

2. Process according to Claim 1, characterised in that the alcoholate/initiator molar ratio is between 0.3 and 25.

3. Process according to either of Claims 1 to 2, characterised in that the polymerisation is carried out at a temperature of between -80 °C and +60 °C.

4. Process according to either of Claims 1 to 3, characterised in that the polymerisation is carried out in the presence of at least one solvent.

5. Process according to Claim 4, characterised in that the solvent is tetrahydrofurane.

6. Process according to Claim 4, characterised in that the solvent is toluene.

7. Process according to either of Claims 1 to 6, characterised in that it results in obtaining a polymer containing a primary alkyl acrylate block which has a number-average molecular weight of between 2,000 and 200,000 and a polydispersity index of between 1.2 and 3.5.

8. Process according to either of Claims 1 to 6, characterised in that it results in obtaining a diblock copolymer of structure A-B in which A denotes a block of methacrylic monomer, of secondary or tertiary alkyl acrylate or of vinylaromatic monomer, and B denotes a primary alkyl acrylate block, the number-average molecular weight of the block A being between 2,000 and 300,000, the number-average molecular weight of the block B being between 2,000 and 200,000, and the polydispersity

14

index of the diblock copolymer being between 1.2 and 2.2, and for this purpose :

(1) in a first stage, the anionic polymerisation of a monomer A is conducted with the aid of the above-mentioned initiating system, so as to obtain a living chain unit of the polymer block A, and then

(2) in a second stage, the living chain unit thus obtained is reacted with a monomer B in the presence of the initiating system of the first stage.

**Patentansprüche**

**Patentansprüche für folgende Vertragsstaaten : AT, BE, CH, DE, DK, FR, GB, GR, IT, LI, LU, NL, SE**

1. Startersystem für die anionische Polymerisation von Acrylmonomeren und gegebenenfalls Vinyl-Comonomeren, welches mindestens einen Starter der allgemeinen Formel R-M (I) umfaßt, worin M ein Metall, ausgewählt unter Alkali- und Erdalkalimetallen, bezeichnet und R einen geradkettigen oder verzweigten Alkylrest mit 2 - 6 Kohlenstoffatomen oder einen Arylrest oder einen Arylalkylrest bezeichnet, dadurch gekennzeichnet, daß die Polymerisation außerdem in Gegenwart von mindestens einem Alkalimetallalkoholat der allgemeinen Formel $R_1 OM_1$ durchgeführt wird, worin $R_1$ einen geradkettigen oder verzweigten Alkylrest mit 1 - 6 Kohlenstoffatomen oder einen Arylrest oder einen Arylalkylrest bezeichnet und $M_1$ für ein Alkalimetall steht, mit der Maßgabe, daß, wenn $M_1$ für Lithium steht, R einen Aryl- oder Arylalkylrest bedeutet.

2. Startersystem nach Anspruch 1, dadurch gekennzeichnet, daß das molare Verhältnis

$$\frac{\text{Alkoholat}}{\text{Starter}}$$

0,3 bis 25 beträgt.

3. Verfahren zur Polymerisation von primären, sekundären oder tertiären Alkylacrylaten oder von Methacrylmonomeren und gegebenenfalls von Vinyl-Comonomeren, dadurch gekennzeichnet, daß die Polymerisation in Gegenwart eines Startsystems gemäß einem der Ansprüche 1 oder 2 durchgeführt wird.

4. Verfahren nach Anspruch 3, dadurch gekennzeichnet, daß man die Polymerisation bei einer Temperatur von -80°C bis +60°C durchführt.

5. Verfahren nach einem der Ansprüche 3 oder 4, dadurch gekennzeichnet, daß man die Polymerisation in Gegenwart von mindestens einem Lösungsmittel durchführt.

6. Verfahren nach Anspruch 5, dadurch gekennzeichnet, daß das Lösungsmittel Tetrahydrofuran ist.

7. Verfahren nach Anspruch 5, dadurch gekennzeichnet, daß das Lösungsmittel Toluol ist.

8. Verfahren nach einem der Ansprüche 3 bis 7, dadurch gekennzeichnet, daß man ein Polymer erhält, welches einen primären Alkylacrylat-Block mit einem zahlenmittleren Molekulargewicht $M_n$ von 2 000 - 200 000 und einem Polydispersitätsindex von 1,2 bis 3,5 umfaßt.

9. Copolymer aus zwei Blöcken bildet durch das Verfahren nach einem der Ansprüche 3 bis 7, mit der allgemeinen Struktur A-B, dadurch gekennzeichnet, daß A einen Block aus Methacrylmonomeren, sekundären oder tertiären Alkylacrylaten oder aromatischen Vinylmonomeren darstellt und B einen Block aus primären Alkylacrylaten darstellt, wobei das zahlenmittlere Molekulargewicht $M_n$ des Blocks A einen Wert von 2 000 bis 300 000 besitzt und das zahlenmittlere Molkulargewicht $M_n$ des Blocks B einen Wert von 2 000 bis 200 000 besitzt und der Polydispersitätsindex des Copolymers aus zwei Blöcken einen Wert von 1,2 bis 2,2 einnimmt.

10. Verfahren zur Bildung des Copolymers aus zwei Blöcken nach Anspruch 9, dadurch gekennzeichnet daß man

(1) in einem ersten Schritt eine anionische Polymerisation eines Monomers A mit Hilfe des Startersystems nach einem der Ansprüche 1 oder 2 durchführt, wobei man eine Lebend-Kette eines Polymerblocks A erhält und anschließend

(2) in einem zweiten Schritt die so erzeugte Lebend-Kette mit einem Monomer B in Gegenwart des Startersystems aus dem ersten Schritt reagieren läßt.

**Patentansprüche für folgenden Vertragsstaat : ES**

1. Verfahren zur Polymerisation von primären, sekundären oder tertiären Alkylacrylaten oder von Methacrylmonomeren und gegebenenfalls von Vinyl-Comonomeren, welches mindestens einen Starter der allgemeinen Formel R-M (I) umfaßt, worin M ein Metall, ausgewählt unter Alkali- und Erdalkalimetallen, bezeichnet und R einen geradkettigen oder verzweigten Alkylrest mit 2 - 6 Kohlenstoffatomen oder einen Arylrest oder einen Arylalkylrest bezeichnet, dadurch gekennzeichnet, daß die Polymerisation außerdem in Gegenwart von mindestens einem Alkalimetallalkoholat der allgemeinen Formel $R_1 O M_1$ durchgeführt wird, worin $R_1$ einen geradkettigen oder verzweigten Alkylrest mit 1 - 6 Kohlenstoffatomen oder einen Arylrest oder einen Arylalkylrest bezeichnet und $M_1$ für ein Alkalimetall steht, mit der Maßgabe, daß, wenn $M_1$ für Lithium steht, R einen Aryl- oder Arylalkylrest bedeutet.

2. Verfahren nach Anspruch 1, dadurch gekennzeichnet, daß das molare Verhältnis

$$\frac{\text{Alkoholat}}{\text{Starter}}$$

0,3 bis 25 beträgt.

3. Verfahren nach einem der Ansprüche 1 oder 2, dadurch gekennzeichnet, daß man die Polymerisation bei einer Temperatur von -80 °C bis +60 °C durchführt.

4. Verfahren nach einem der Ansprüche 1 bis 3, dadurch gekennzeichnet, daß man die Polymerisation in Gegenwart von mindestens einem Lösungsmittel durchführt.

5. Verfahren nach Anspruch 4, dadurch gekennzeichnet, daß das Lösungsmittel Tetrahydrofuran ist.

6. Verfahren nach Anspruch 4, dadurch gekennzeichnet, daß das Lösungsmittel Toluol ist.

7. Verfahren nach einem der Ansprüche 1 bis 6 dadurch gekennzeichnet, daß man ein Polymer erhält, welches einen primären Alkylacrylat-Block mit einem zahlenmittleren Molekulargewicht $M_n$ von 2 000 - 200 0000 und einen Polydispersitätsindex von 1,2 bis 3,5 umfaßt.

8. Polymerisationsverfahren nach einem der Ansprüche 1 bis 6, dadurch gekennzeichnet, daß man zur Bildung eines Copolymers aus zwei Blöcken der allgemeinen Struktur A-B, worin A einen Block aus Methacrylmonomeren, aus sekundärem oder tertiärem Alkylacrylat oder aus einem aromatischen Vinylmonomer darstellt und B einen Block aus einem primären Alkylacrylat darstellt, wobei das zahlenmittlere Molekulargewicht $M_n$ des Blocks A einen Wert von 2 000 bis 300 000 annimmt, das zahlenmittlere Molekulargewicht $M_n$ des Blocks B einen Wert von 2 000 bis 200 000 annimmt und der Polydispersitätsindex des Copolymers aus zwei Blöcken einen Wert von 1,2 bis 2,2 annimmt,

(1) in einem ersten Schritt eine anionische Polymerisation eines Monomers A mit Hilfe des oben genannten Startersystems durchführt, wobei man eine Lebend-Kette eines Polymerblocks A erhält und anschließend

(2) in einem zweiten Schritt die so erzeugte Lebend-Kette mit einem Monomer B in Gegenwart des Startersystems aus dem ersten Schritt reagieren läßt.